# EUROPEAN PATENT APPLICATION

(11) **EP 2 403 033 A1**
(43) Date of publication of application: **04.01.2012**
(21) Application number: 11161005.1
(22) Date of filing: 04.04.2011
(51) Int. Cl.: H01M 2/10

(54) **Supporting assembly for batteries and corresponding emergency lamp provided with such supporting assembly.**

(30) Priority: 30.06.2010 IT BO20100418
(71) Applicant: Schneider Electric Industrie Italia S.p.A., 02010 Vazia (Rieti) (IT)
(72) Inventor: Guzzinati, Ivano, 40066, PIEVE DI CENTO BO (IT)
(74) Representative: Modiano, Micaela Nadia

(57) **Abstract**

A supporting assembly (1) for batteries (A) and the like that comprises at least one contoured arm (2), which protrudes from a base (3), and at least one respective abutment that faces it.

The contoured arm (2) is elastically deformable and is oriented toward the abutment for the elastic clamping of a battery (A) inserted in the space delimited between the deformed arm (2), the abutment and the base (3).

## Description

The present invention relates to a supporting assembly for batteries and the like and an emergency lamp provided with such supporting assembly.

In the bodies of lighting sources, in particular in emergency lamps (which automatically switch themselves on in the event of an absence of power supply voltage from the mains electricity), an accommodation seat is generally provided for at least one battery.

This seat is conveniently shaped so as to complement the battery that it has to accommodate: in this way the dimensions and the shape of the battery are reflected by the respective seat so as to optimise the stability thereof when it is in the installation configuration.

Depending on the performance levels required of the emergency lamp (the maximum length of continuous service of the light source totally powered by the energy provided by the battery) it may be necessary to adopt batteries of accumulators which can accumulate (and subsequently dispense) different energy contributions.

Batteries that enable a longer duration of service are generally larger in size than batteries of lower performance: this means that each lamp body will have to provide accommodation seats dedicated to each type of battery that might be installed therein.

The number of components necessary for assembling a lamp is therefore high, in that for each lamp body a plurality of different seats will have to be provided.

This determines consequent problems of storage thereof and the necessity to appreciably modify the structure of the lamp body if it is necessary to increase the performance levels of a lamp that is already installed. Such modifications to the lamp already installed also determine high costs owing to the complexity of the operation which must be carried out by a qualified technician.

Problems similar to those described for emergency lamps can also arise with other battery-operated devices.

The aim of the present invention is to solve the above mentioned problems, by providing a supporting assembly for batteries and the like which is versatile and adapted to support a plurality of different batteries.

Within this aim, an object of the invention is to provide a supporting assembly for batteries and the like which makes the substitution of the battery with another easy and intuitive, even if the batteries are different in size.

Another object of the invention is to provide a supporting assembly for batteries and the like which is constituted by a small number of predominantly fixed components.

Another object of the present invention is to provide an emergency lamp provided with such supporting assembly which can accommodate batteries of different sizes and which enables their simple and intuitive substitution.

A further object of the present invention is to provide a supporting assembly for batteries and the like which is low cost, easily and practically implemented and safely applied.

This aim and these objects, as well as others which will become better evident hereinafter, are achieved by a supporting assembly for batteries and the like, characterized in that it comprises at least one contoured arm, which protrudes from a base, and at least one respective abutment that faces it, said contoured arm being elastically deformable and being oriented toward said abutment for the elastic clamping of a said battery inserted in the space delimited between said deformed arm, said abutment and said base.

This aim and these objects are also achieved by an emergency lamp provided with a supporting assembly for batteries and the like, of the type comprising a shell provided with means for fixing on a respective installation surface and a body which can be coupled detachably to said shell and is provided with the light source, with at least one part of the respective power supply circuit and of the battery, characterized in that said body comprises at least one contoured arm, which protrudes from its base surface, that is directed, in the installation configuration, toward said shell, and at least one respective abutment which faces it, said contoured arm being elastically deformable and oriented toward said abutment for the elastic clamping of said battery inserted in the space delimited between said deformed arm, said abutment and said base surface.

Further characteristics and advantages of the invention will become better apparent from the detailed description that follows of a preferred, but not exclusive, embodiment of the supporting assembly for batteries and the like, in the embodiment used in an emergency lamp, according to the invention, illustrated by way of non-limiting example in the accompanying drawings, wherein:

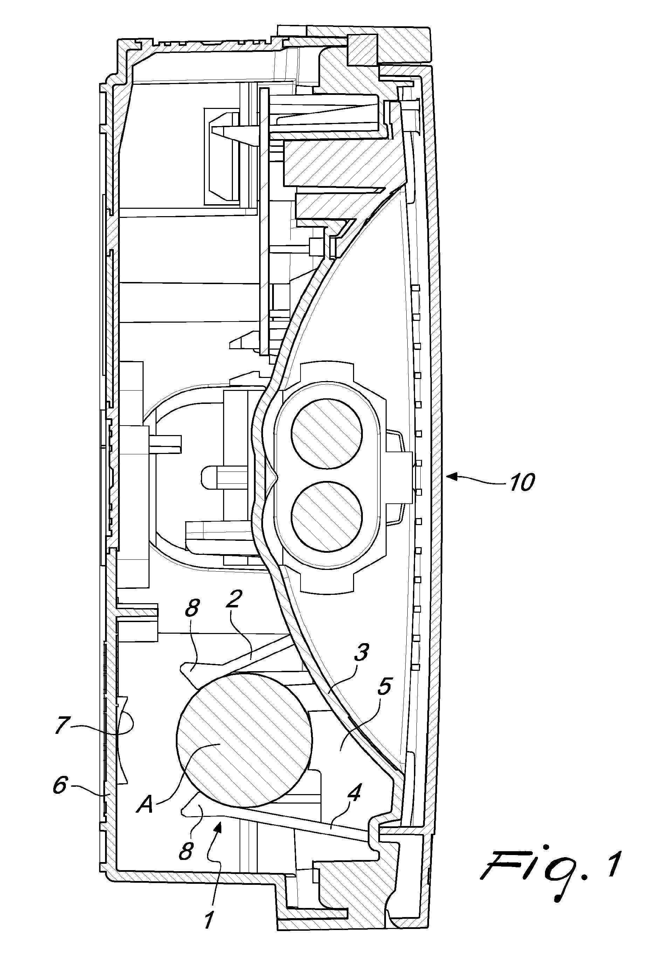

Figure 1 is a sectional view, taken along a transversal plane, of an emergency lamp provided with the supporting assembly according to the invention;

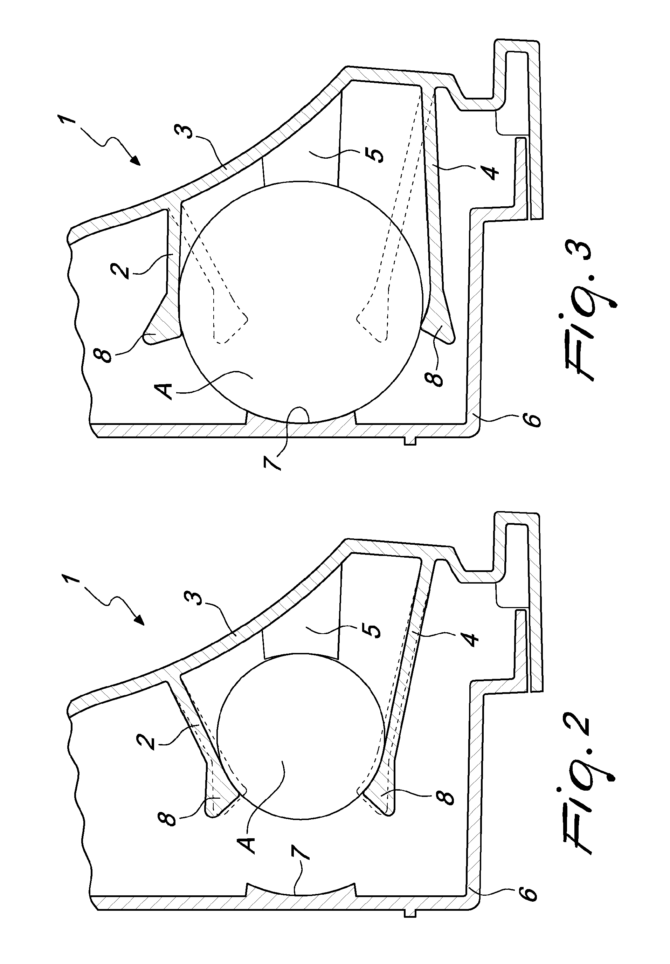

Figure 2 is a sectional view, taken along a transversal plane, of a supporting assembly according to the invention supporting a battery with a small diameter;
Figure 3 is a sectional view, taken along a transversal plane, of a supporting assembly according to the invention supporting a battery with a large diameter.

With reference to the figures, the reference numeral 1 generally designates a supporting assembly for batteries A and the like.

The supporting assembly 1 for batteries A comprises at least one contoured arm 2, which protrudes from a base 3, and at least one respective abutment that faces it.

The contoured arm 2 is elastically deformable and oriented toward the abutment (its end is therefore extended toward the abutment, although the point of attachment to the base 3 is further away from it) for the elastic clamping of a battery A inserted in the space delimited between the arm 2 (in the elastic deformation configuration), the abutment and the base 3.

According to an embodiment of undoubted practical and applicative interest, there are two contoured arms 2, facing each other, one (the arm 2) being inclined toward the other (the arm 4).

The second arm 4 thus constitutes the abutment; indeed, the arms 2 and 4, being elastically deformable, enable the elastic clamping of the battery A inserted in the space delimited between the arms 2 and 4 (in the elastic deformation configuration) and the base 3.

It should be noted that the base 3 can positively comprise a resting element 5 for the battery A (for the resting of a portion thereof) in a substantially central position with respect to the arm 2 and to the abutment (in the embodiment described previously and shown in the accompanying figures the abutment is constituted by the second arm 4).

According to a possible practical application, the assembly 1 comprises a closure element 6, which can be associated stably with the base 3 and provided with a contoured recess 7 which is aligned, in the closure configuration of the assembly 1, with the battery A, when the battery A is clamped between the arm 2, the abutment (in the embodiment described previously and shown in the accompanying figures the abutment is constituted by the second arm 4) and the base 3, for the optional resting of a portion of the battery A (generally a portion on the other side from the portion resting on the resting element 5).

The applicative example of greatest interest is that of an emergency lamp 10 provided with supporting assembly 1 for batteries A and the like which comprises a shell (which in fact, in this application, coincides with the closure element 6) provided with means for fixing onto a respective installation surface.

Each light source has an outer enclosure which generally consists of two parts: in this case, one of these will be stably fixed to the installation surface (the shell coinciding with the closure element 6 of the assembly 1).

The term emergency lamp 10 is used here to mean any light source, ceiling lamp and the like which is provided with a battery A of accumulators which is adapted to power the light source in the event of an absence of power supply from the mains electricity. The emergency lamp 10 will switch itself on every time the power supply from the mains electricity fails, making it possible to identify the exit routes from the area and ensuring, in general, a level of lighting that corresponds to the minimum requirements imposed by law and by the installation requirements.

The emergency lamp 10 also comprises a body, which can be coupled detachably to the shell, and which is provided with the light source, with at least one part of the respective power supply circuit and with the battery A.

The body comprises at least one contoured arm 2 which protrudes from its base surface (which incidentally constitutes the base 3 of the assembly 1) that is directed, in the installation configuration, toward the shell, and at least one respective abutment that faces it.

The contoured arm 2 will advantageously be elastically deformable and oriented toward the abutment for the elastic clamping of the battery A when the battery A is inserted in the space delimited between the deformed arm 2, the abutment and the base surface (the base 3).

Also in the case of application of the assembly 1 to an emergency lamp 10, there are two contoured arms (the first arm 2 and a second arm 4), facing each other, and one (arm) 2 is inclined toward the other (arm) 4.

The second arm 4 constitutes, in this case, the abutment.

The arms 2 and 4 are elastically deformable for the elastic clamping of the battery A inserted in the space delimited between the deformed arms 2 and 4 and the base surface 3.

The base surface (the base 3) comprises, also in this case involving the installation of the assembly 1 on an emergency lamp 10, a resting element 5, for a portion of the battery A, in a substantially central position with respect to the arm 2 and to the abutment (and hence centered with respect to the two arms 2 and 4 when the second arm 4 constitutes the abutment, as shown in the accompanying figures).

It should be pointed out that, since the shell basically constitutes the closure element 6 of the assembly 1, then it will be provided with a contoured recess 7 that is aligned, in the closure configuration of the assembly 1, with the battery A, which will in turn be clamped between the arm 2, the abutment (according to the examples shown in the accompanying figures this is constituted by the arm 4) and the base surface (the base 3): the contoured recess 7 will accommodate a resting portion of the battery A (the portion that is substantially on the opposite side from the one resting on the element 5).

It is necessary to point out that the deformation of the at least one arm 2 (and therefore also of the arm 4 with reference to the embodiment shown in the accompanying figures), with respect to its configuration of rest, enables the clamping of substantially cylindrical batteries A having a diameter comprised between 20 mm, with deformation with consequent variation of orientation of the at least one arm 2 (and of the second arm 4) substantially less than 10°, and 40 mm, with deformation with consequent variation of orientation of the at least one arm 2 (and of the second arm 4) greater even than 30°.

In particular, it is emphasised that the diameters of the batteries A adopted in the emergency lamps are normally comprised between 23 mm and 33 mm.

The at least one contoured arm 2 (and also the second arm 4, again with reference to the accompanying tables of figures) comprises an enlarged end band 8, which constitutes a prong for retaining the battery A.

In the installation configuration, the enlarged band 8 rests on the battery A beyond the position of its maximum thickness (corresponding to the thickness identified by a diametrical plane of symmetry), thus retaining it toward the base surface (the base 3) due to the elastic forcing of the arm 2 toward the abutment (and of the arm 2 toward the arm 4).

Advantageously, the present invention solves the above mentioned problems, by providing a supporting assembly 1 for batteries A and the like which is versatile and adapted to support a plurality of different batteries A.

Usefully the supporting assembly 1 according to the invention makes the substitution of the battery A with another easy and intuitive, even if the batteries are different in size.

Positively the supporting assembly 1 for batteries A is constituted by a small number of predominantly fixed components.

Furthermore, the fact that an emergency lamp 10 provided with the supporting assembly 1 can accommodate batteries A of different sizes can certainly be appreciated from a technical, applicative and implementation viewpoint, as well as being of undeniable commercial interest.

Furthermore the assembly 1 mounted on this lamp enables the simple and intuitive substitution of the batteries A even with others of different sizes.

The proposed invention is thus a fixing assembly 1 for batteries A of an innovative type: the use of a single type of universal clamping element for fixing all the batteries A that have a diameter that varies from 23 mm to 33 mm makes the assembly 1 more efficient and versatile than all the fixing means of known type.

This technical solution ensures the reduction of the number of dedicated products in stores and the number of set-ups necessary for changing a mold or die during production (which occurs if the fixing means are dedicated to a particular type of battery A, as is the case with the fixing means of known type).

Another positive consequence is the reduction of the percentage of errors in the production process with obvious economic benefits: always producing a single, identical component minimises errors owing to production change phases (mainly in the phase of starting each new production run).

The emergency lamp 10 according to the invention, therefore, is easier to install and is provided with solutions that lead to a general reduction in costs.

The invention thus conceived is susceptible of numerous modifications and variations, all of which are within the scope of the appended claims. In addition, all the details may be replaced by other, technically equivalent elements.

In the embodiments illustrated, individual characteristics shown in relation to specific examples may in reality be interchanged with other, different characteristics, existing in other embodiments.

In practice the materials employed, as well as the dimensions, may be any according to requirements and to the state of the art.

The disclosures in Italian Patent Application No. BO2010A000418 from which this application claims priority are incorporated herein by reference.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A supporting assembly for batteries (A) and the like, **characterized in that** it comprises at least one contoured arm (2), which protrudes from a base (3), and at least one respective abutment that faces it, said contoured arm (2) being elastically deformable and being oriented toward said abutment for the elastic clamping of a battery (A) inserted in the space delimited between said deformed arm (2), said abutment and said base (3).

2. The supporting assembly according to claim 1, **characterized in that** said contoured arms (2, 4) are two in number and face each other, one (2) being inclined toward the other one (4), said second arm (4) constituting said abutment, said arms (2, 4) being elastically deformable for the elastic clamping of said battery (A) inserted in the space delimited between said deformed arms (2, 4) and said base (3).

3. The supporting assembly according to claim 1, **characterized in that** said base (3) comprises a resting element (5) for at least one portion of said battery (A) in a substantially central position with respect to said arm (2) and said abutment.

4. The supporting assembly according to claim 1, **characterized in that** it comprises a closure element (6), which can be associated stably with said base (3) and provided with a contoured recess (7) which is aligned, in the closure configuration of said assembly (1), with said battery (A), which is clamped between said arm (2), said abutment and said base (3), for the possible resting of at least one portion thereof.

5. An emergency lamp provided with a supporting assembly (1) for batteries (A) and the like, of the type comprising a shell provided with means for fixing on a respective installation surface and a body which can be coupled detachably to said shell and which is provided with the light source, with at least one part of the respective power supply circuit and of the battery (A), **characterized in that** said body comprises at least one contoured arm (2), which protrudes from its base surface (3) that is directed, in the installation configuration, toward said shell, and at least one respective abutment which faces it, said contoured arm (2) being elastically deformable and oriented toward said abutment for the elastic clamping of said battery (A) inserted in the space delimited between said deformed arm (2), said abutment and said base surface (3).

6. The emergency lamp according to claim 5, **characterized in that** said contoured arms (2, 4) are two in number and face each other, one (2) being inclined toward the other (4), said second arm (4) constituting said abutment, said arms (2, 4) being elastically deformable for the elastic clamping of said battery (A) inserted in the space delimited between said deformed arms (2, 4) and said base surface (3).

7. The emergency lamp according to claim 5, **characterized in that** said base surface (3) comprises a resting element (5) for at least one portion of said battery (A) in a substantially central position with respect to said arm (2) and said abutment.

8. The emergency lamp according to claim 5, **characterized in that** said shell is provided with a contoured recess (7) which in the closed configuration of said assembly (1) is aligned with said battery (A), clamped between said arm (2), said abutment and said base surface (3), for the possible resting of at least one portion thereof.

9. The emergency lamp according to one or more of claims 5 to 8, **characterized in that** the deformation of said at least one arm (2) with respect to its inactive configuration allows the clamping of substantially cylindrical batteries (A) whose diameter is comprised between 20 mm, in which case the deformation entails a consequent variation of the orientation of the at least one arm (2) of substantially less than 10°, and 40 mm, in which case the deformation entails a consequent variation of the orientation of the at least one arm (2) of even more than 30°.

10. The emergency lamp according to one or more of claims 5 to 8, **characterized in that** said at least one contoured arm (2) comprises an enlarged end band (8), which constitutes a prong for retaining the battery (A), in the installation configuration, said enlarged band (8) resting on said battery (A) beyond the position of its maximum thickness, retaining it toward said base surface (3) due to the elastic forcing of said arm (2).
